# EUROPEAN PATENT SPECIFICATION

(11) **EP 1 443 752 B1**
(45) Date of publication and mention of the grant of the patent: **04.05.2005**
(21) Application number: 04001685.9
(22) Date of filing: 27.01.2004
(51) Int. Cl.: H04N 5/00, H04N 5/44

(54) **Broadcasting reception apparatus**
Rundfunkempfangsvorrichtung
Dispositif récepteur de radiodiffusion

(30) Priority: 30.01.2003 JP 2003022154
(43) Date of publication of application: 04.08.2004
(73) Proprietor: Kabushiki Kaisha Toshiba, Tokyo (JP)
(72) Inventor: Mitsutoshi, Aoyagi c/o Toshiba Corporation, 1-chome Minato-ku Tokyo 105-8001 (JP)
(74) Representative: Henkel, Feiler & Hänzel

(56) References cited:
- WO-A-01/60064
- WO-A-20/04004341

## Description

The present invention relates to an improvement in a broadcasting reception apparatus for receiving, for example, television broadcasting.

As is well known in the art, a current TV receiver is such that, by operating a key on a remote controller, power supply is started and the TV receiver is turned on.

In this case, the TV receiver is turned on while retaining the last set state in effect immediately before the power supply was stopped. For example, the receiver is automatically turned on at the channel selected immediately before the power supply was stopped.

Where one television receiver is used exclusively by a single user, it is turned on so as to retain the last set state each time the power supply is started and is, therefore, convenient for the user.

On the other hand, where one television receiver is shared by a number of users, it is necessary to re-set it to a desired program each time the power supply is started, inconveniencing each user and thus presenting a problem.

Jpn. Pat. Appln. KOKAI Publication No. 2002-57996 discloses a structure in which a television signal corresponding to a channel desired by the user is automatically selected by broadcasting the television signal with a digital code superimposed thereon and comparing the code with a code previously registered by the viewer in the receiver.

However, in the structure set out in this KOKAI PUBLICATION, because it is necessary to broadcast the television signal with the digital code superimposed thereon, it is difficult to readily achieve the structure in practice.

The present invention is achieved with the above situation in view, and it is accordingly the object of the present invention to provide a broadcasting reception apparatus, wherein the reception apparatus can be readily started, by means of a simpler structure while retaining set content corresponding to a plurality of users.

According to one aspect of the present invention, there is provided a broadcasting reception apparatus comprising: an input section configured to receive a password; a registration section configured to allow a plurality of such passwords to be registered; a broadcasting reception section configured to have its starting controlled on the basis of a result of comparison between the password registered in the registration section and any password input through the input section; a storage section configured to gain information relating to a reception history with the broadcasting reception section in a started state; and a control section configured to control setting contents, at a starting time of the broadcasting reception section, on the basis of the information relating to the reception history stored in the storage section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an embodiment of the present invention which is used in explaining a television reception apparatus;
FIG. 2 is a view for explaining one example of operation keys on a remote controller in the embodiment;
FIG. 3 is a flowchart for use in explaining one portion of a mode setting operation in the embodiment;
FIG. 4 is a flowchart for use in explaining the remaining portion of the mode setting operation in the present embodiment;
FIG. 5 is a flowchart for use in explaining the operation of a mode-set TV reception apparatus according to the embodiment of the present invention;
FIG. 6 is a flowchart for use in explaining the operation of a mode set TV reception apparatus according to the embodiment of the present invention;
FIG. 7 is a flowchart for use in explaining a set-content modifying operation in the embodiment of the present invention; and
FIG. 8 is a flowchart for use in explaining a set-content modifying operation in the embodiment of the present invention.

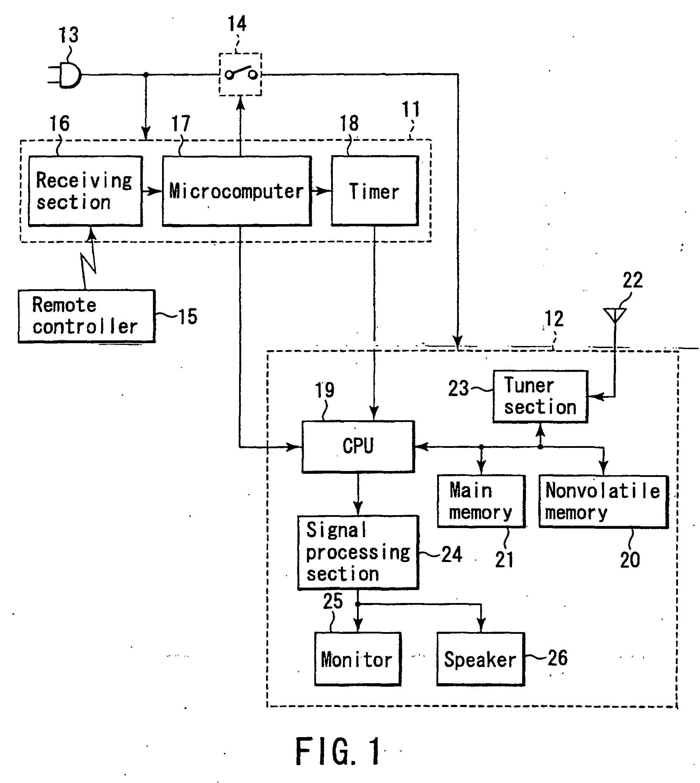

One embodiment of the present invention will be explained in more detail below with reference to the accompanying drawing. FIG. 1 shows a television receiver as explained in connection with this embodiment. This television receiver is generally classified into a standby block 11 and a reception block 12.

Of these blocks, the standby block 11 is normally supplied with electric power from a power supply through a plug 13 and is set to a starting state. The reception block 12, on the other hand, is such that only when a power supply switch 14 is closed is it supplied with the electric power from the power supply through the plug 13.

Here, the standby block 11 comprises a receiving section 16 for receiving operation information which is transmitted by means of light from a remote controller 15, a microcomputer 17 for allowing the operation information which has been received at the receiving section 16 to be analyzed and outputting a corresponding control signal, and a timer 18 for measuring the time involved.

When a power supply key on the remote controller 15 is operated, the microcomputer receives corresponding operation information via the receiving section 16 to close the power supply switch 14.

The reception block 12 is equipped with a central processing unit (CPU) 19. The CPU 19 is so configured as to receive a control signal from the microcomputer 17 in the standby block 11 as well as time information measured by the timer 18.

The CPU 19 generally controls the reception block 12 in such a manner as to allow a program which has been recorded in compressed form in a nonvolatile memory 20 to be output according to a program in a main memory 21, that is, also with the use of time information, etc., as required, to be output with a control signal from the microcomputer 17 in such a manner as to reflect the user's operation.

That is, a TV signal which has been received by an antenna 22 is supplied to a tuner section 23 where a video signal and audio signal of a desired channel are selected. The video and audio signals thus selected in the tuner section 23 are supplied via the CPU 19 to a signal processing unit 24 where they are demodulated.

The video signal thus demodulated in the signal processing section 24 is supplied to a monitor 25 for video display, while, on the other hand, the audio signal thus demodulated in the signal processing section 24 is fed to a speaker 26 for speech reproduction.

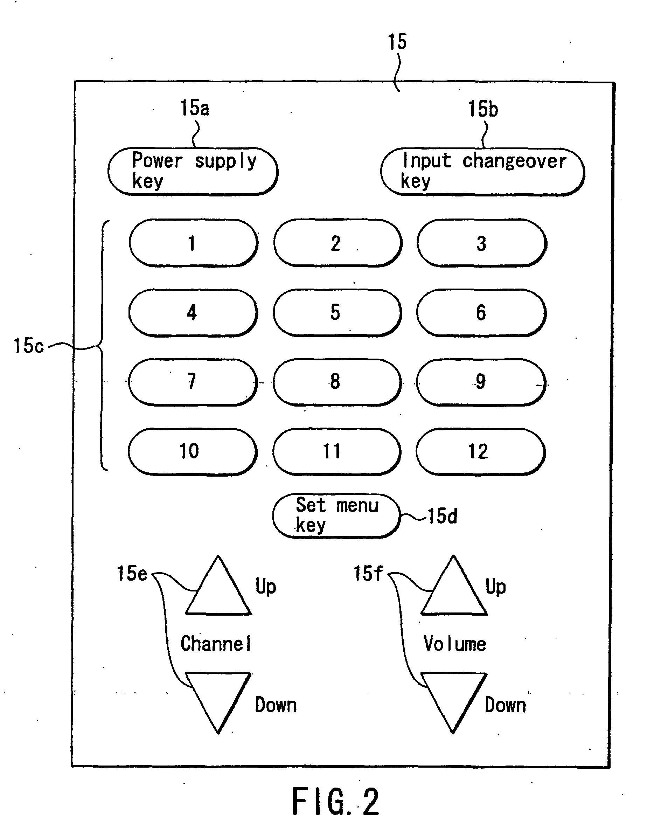

FIG. 2 shows one example of operation keys on the remote controller 15, that is, the above-mentioned power supply key 15a, an input changeover key 15b, numeric keys 15c numbered 1 through 12, set menu key 15d, up/down keys 15e for reception channel, and volume up/down keys 15f.

Here, this TV receiver can be set to either a common mode available to any non-specific user or a personal mode accessible by an input operation of a password by a registered specific user only or to both modes.

For the common mode and personal mode, a database is provided with their set mode contents stored in it. For the personal mode, in particular, a database is provided with its stored content set for each registered user. The data involved is stored in the nonvolatile memory 20.

As the set contents, for example, there are various items such as a history of view channels (selected channel numbers, view start/end time, view start/end week days, etc.), a parental lock level, various kinds of parameters for volume control, various kinds of parameters for video adjustment, and so on. These are automatically stored in a database for each variation involved.

It is to be noted that, when the power supply switch 14 is changed over from closed to open, the changed-over time is set to a view end time and view end week day. Further, when the power supply switch 14, being closed, is placed in the power off state by forcibly removing the plug 13 from the associated outlet, the next time the power is supplied to the reception block 12 a view end time and view end week day are set.

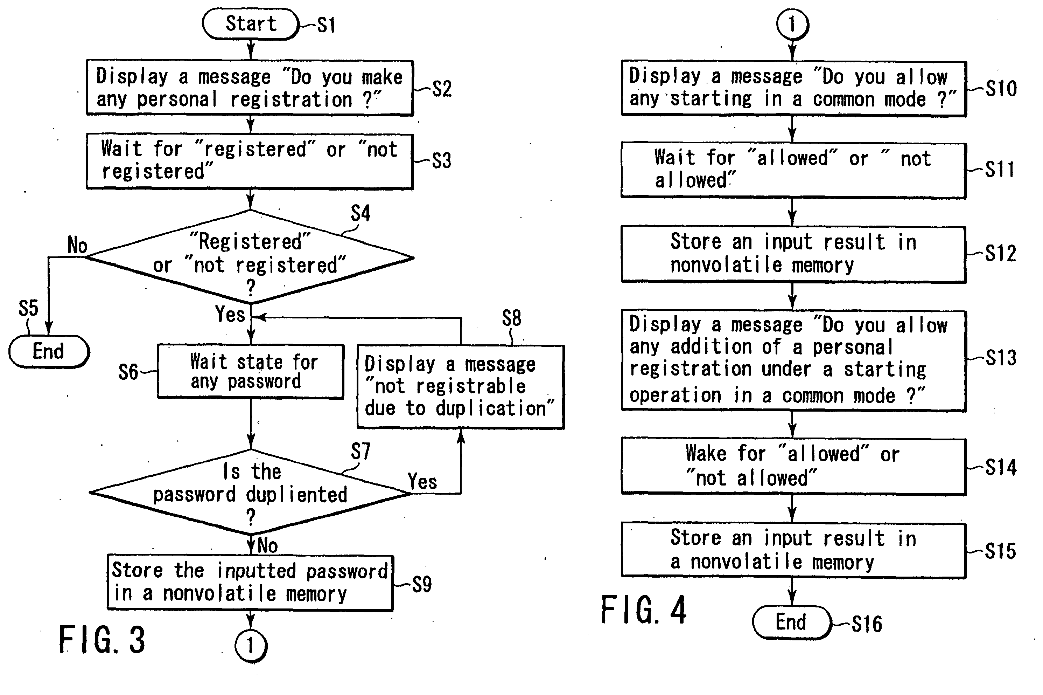

Here, FIGS. 3 and 4 show a combined operation flowchart for setting the television receiver to a common mode, personal mode or both modes. This mode setting operation is realized in the case where, with a power supply switch 14 of a newly bought TV receiver being initially closed, a menu screen is displayed on a monitor 25 for allowing the user to effect a mode setting at each insertion of a plug 14 into an associated outlet, and so on.

First, when a mode setting is started at step S1, the CPU 19 allows a message indicating "Register in personal mode?" to be displayed on the monitor 25 at step S2. At step S3, a wait is made for YES/NO decision in this connection and, at step S4, either YES or NO is decided as being input.

In this case, for example, YES information is input in the case of the personal registration by operating an input changeover key 15b on the remote controller 15 and then operating the channel up key 15e. On the other hand, NO information is input by operating the input changeover key 15b and operating the channel down key 15e.

In the case where NO is decided for personal registration at step S4, then the CPU 19 automatically sets the TV receiver to a common mode at step S5 and ends the mode setting operation.

In the case where YES is decided for personal registration at step S4, the CPU 19 sets a wait state for any password of a prescribed number of characters at step S6 and decision is made whether or not an input password is duplicated as being already registered one at step S7.

If decision is made that the input password is duplicated (YES) at step S7, the CPU 19 allows a message indicating "Cannot be registered" to be displayed on the monitor 25 at step S8 and the process goes to step S6.

If decision is made that, at step S7, the password is not duplicated (NO), the CPU 19 allows the input password to be recorded on the nonvolatile memory 20 at step S9 and, here, a personal registration is ended.

Further, the CPU 19 allows a message indicating "Allow starting of receiver in common mode?" to be displayed on the monitor 25 at step S10 and, at step S11, sets a wait state in which such an input is allowed or not allowed. And the CPU allows a result of inputting to be stored in the nonvolatile memory 20 at step S12.

If, in this case, an "allowed" input is received, both the personal mode and common mode are set by the CPU 19. If, on the other hand, a "not allowed" input is set, then only a personal mode is set by the CPU 19.

After this, the CPU 19 allows a message indicating "Allow addition of personal registration when common mode is started?" to be displayed on the monitor 25 at step S13. And a wait state is made as to whether "Allow" or "Do not allow" is input (step S14). At step S15, a result of inputting is recorded on the nonvolatile memory 20 and a mode setting operation is ended at step S16.

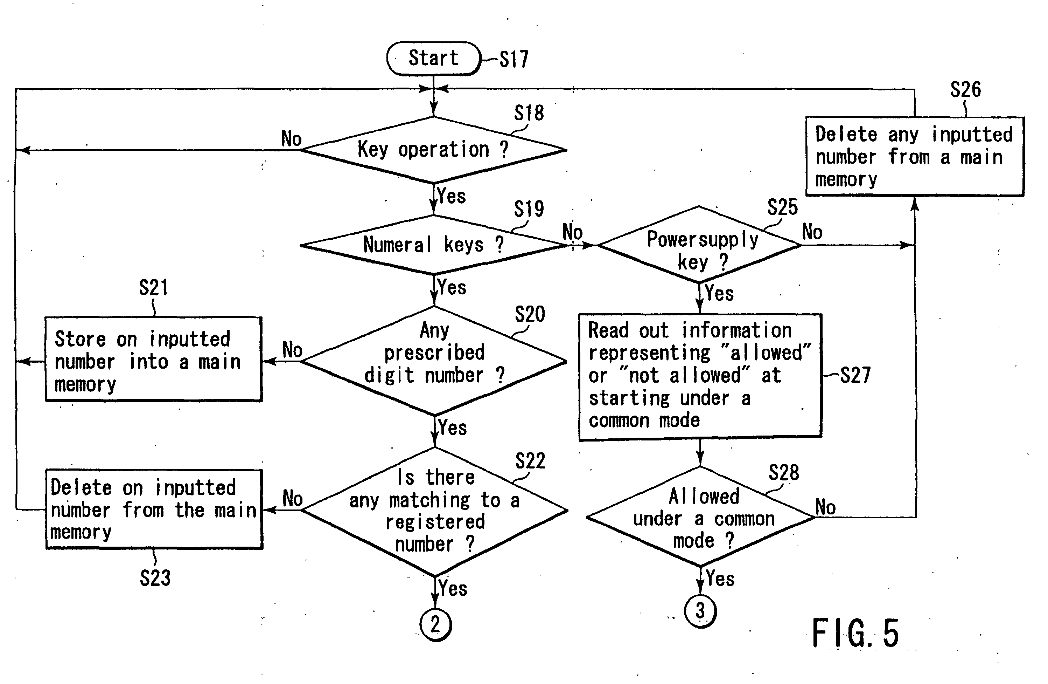

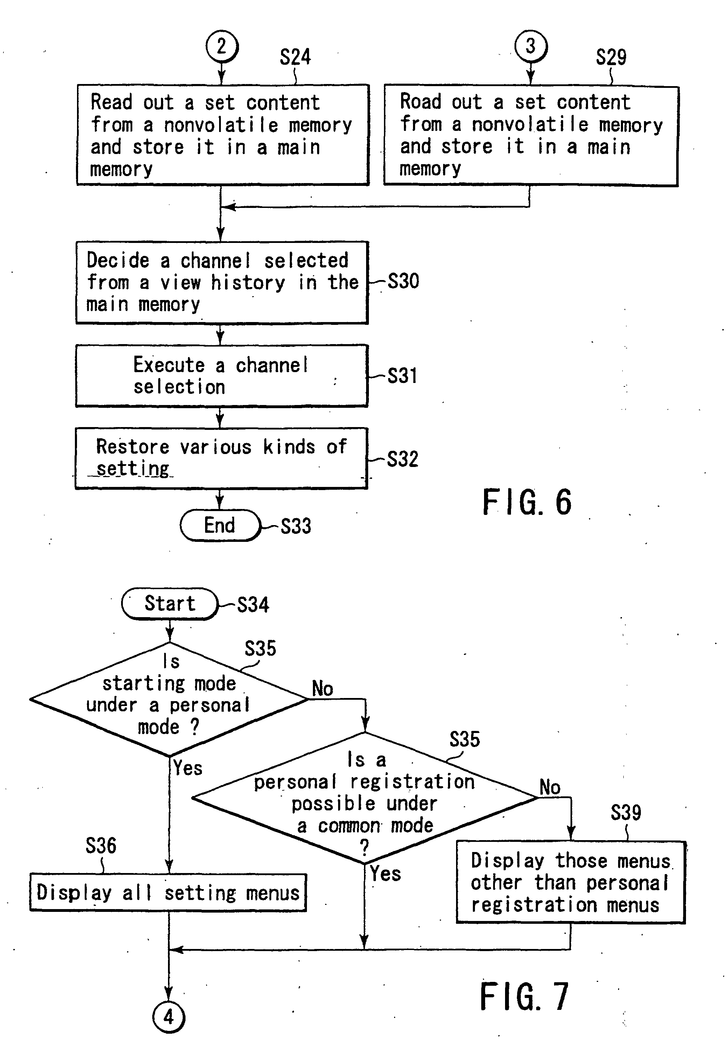

FIGS. 5 and 6 show a combined operation flowchart of the TV receiver to which the above-mentioned mode setting is effected. First, starting is made at step S17 and the microcomputer 17 waits for any keys on the remote controller 15 to be operated at step S18. If decision is made that any keys are operated (YES), the power supply switch 14 is so controlled as to be turned ON.

Then, electric power from the power supply is fed to the reception block 12 and the CPU 19 decides whether or not any numeric keys 15c are operated at step S19. If YES, the CPU 19 decides whether or not the input numbers reach any prescribed digit number at S20. If the answer is NO, then at step S21 the input numbers are stored in the main memory 21 and the process is transferred to step S18.

In the case where the numbers input at step S20 reach a prescribed digit number (YES), the CPU 19 decides whether or not the input numbers are matched to any password registered on the nonvolatile memory 20 at step S22. If NO, the input numbers are deleted from the main memory 21 at step S23 and the CPU 17 allows the power supply switch 14 to be opened through the microcomputer 17 and the process is transferred to step S18.

If, at step S22, the input numbers are decided as being matched to any registered password (YES), the CPU 19 allows the set content to be read out from a corresponding database in the nonvolatile memory 20 and allows the read-out data to be stored in the main memory 21 at step S24.

In the case where any numeric keys 15c are decided as not being operated (NO) at step S19, the CPU 19 decides whether or not any power supply key 15a is operated at step S25. If NO, the numbers input at step S26 are deleted from the main memory 21 and, after the power supply switch 14 has been opened through the microcomputer 17, the process is transferred to step 18.

In the case where it is decided that the power supply key 15a is operated (YES) at step S25, the CPU 19 reads out information of "whether or not to allow starting in common mode" from the nonvolatile memory 20 at step S27 and decides whether or not the starting is allowed in the common mode at step S28.

If the starting is decided as not being allowed (NO), the CPU 19 allows this "not allowed " information to be displayed on the monitor 25 and the process is transferred to step S26. If, on the other hand, this is decided as being allowed (YES), the CPU 19 reads out a set content from a corresponding database of the nonvolatile memory 20 and allows the read-out data to be stored in the main memory 21 at step S29.

Here, after steps S24 or S29, the CPU 19 automatically decides any selecting channel from the view history of the set contents stored in the main memory 21 at step S30 and, at step S31, allows a corresponding channel to be selected at the tuner section 23. After this, the CPU 19 restores various kinds of setting on the basis of the set contents stored in the main memory 21 at step S32 and the process is ended at step S33.

According to the above-mentioned embodiment, with respect to a plurality of registered users, their set content accumulated database is prepared and, for the user whose password is matched, the various kinds of setting can be done based on the set contents read out from the corresponding database.

For this reason, with respect to a plurality of users, the receiver can be easily started, in a simpler structure, with their corresponding set contents. From the view history stored for each registered user, for example, channel selection can be automatically made at a starting time of a receiver under a highly frequently viewing channel.

Further it is possible for those registered users to obtain an image display and voice reproduction corresponding to their own setting contents simply by operating the numeric keys 15c on the remote controller 15 and inputting their own passwords. It is, therefore, not necessary to operate the power supply key 15a and this insures easier handling.

Further, when the common mode is "allowed", the power supply key 15c is normally operated and, in this way, various kinds of setting can be effected based on the set contents read out from the database corresponding to the common mode. It is also possible for those not-registered users to easily use this setting.

Further, the television receiver according to the embodiment above may be normally of an installed type, but it may be of a portable compact type such as a so-called mobile type. Since, in particular, the mobile TV receiver tends to be utilized on his or her own use, if setting is made not to be allowed in the common mode, then it is possible for the user to effectively use it under a highly secure environment.

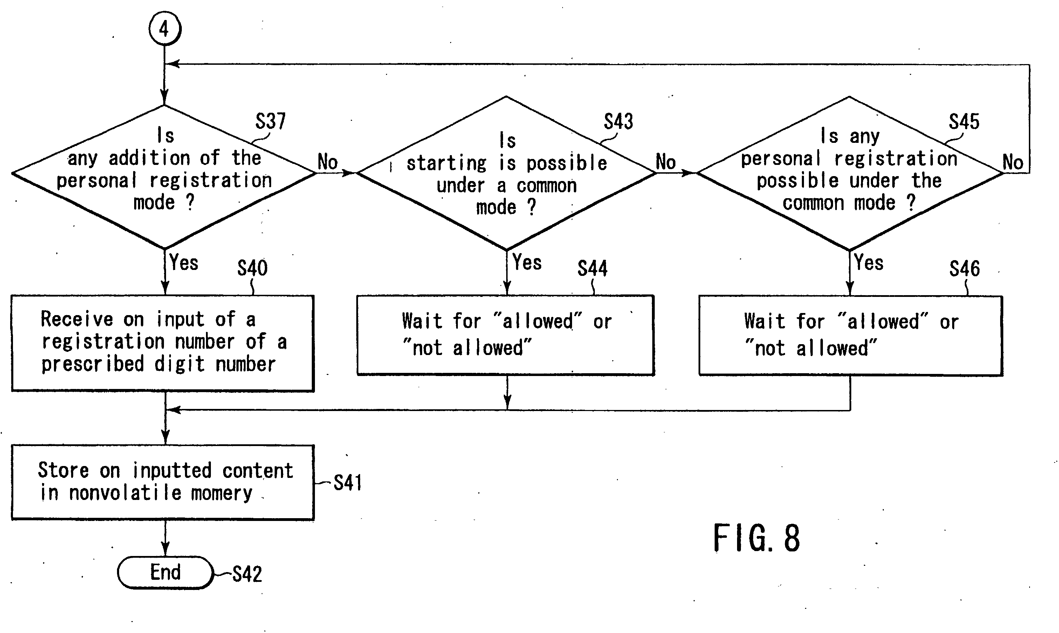

FIGS. 7 and 8 show a combined operation flowchart for modifying setting contents. The modification of the setting contents is started (step S34) by operating the setting menu key 15d of the remote controller 15.

Then the CPU 19 decides whether or not starting is made in a personal mode at step S35. If it is decided that the starting is made in the personal mode (YES), all the setting menu is displayed on the monitor 25 at step S36 and, at step S37, it is decided whether or not any addition of a personal registration is selected.

If it is decided that the starting is not made in the personal mode (NO) at step S35, the CPU 19 decides whether or not any personal registration is allowed in the common mode at step S38 and, if YES, the process is transferred to step S37.

If it is decided that any personal registration is not allowed in the common mode (NO) at step S38, the CPU 19 displays the set menu other than that of the personal registration on the monitor 25 at step S39 and the process is transferred to step S37.

In the case where any addition of the personal registration is decided as being selected (YES) at step S37 above, the CPU 19 receives the incoming password of a prescribed number of characters at step S40 and, at step S41, allows the input contents to be stored in the nonvolatile memory 20 and ends the processing at step S42.

In the case where, at step S37, any addition of the personal registration is decided as not being selected (NO), the CPU 19 decides whether or not the "allowing" of a starting in the common mode is selected at step S43. If YES, the CPU 19 waits for the receipt of an "allowed" or "not allowed" input at step S44 and the process is transferred to step S41.

In the case where, at step S43 above, the "allowing" of a starting in the common mode is decided as not being selected (NO), the CPU 19 decides whether or not the "allowing" of any personal registration is selected at step S45. If NO, the process is transferred to step S37.

If YES, the CPU 19 waits for the receipt of an "allowed" or "not allowed" input at step S46 and the process is transferred to step S41.

The present invention is not restricted to the above-mentioned embodiment and various changes or modification of the present invention can be made without departing from the essence in practice. Further, by properly combining a plurality of constituent elements of the above-mentioned embodiment, it is possible to achieve the above-mentioned invention. For example, any several constituent elements may be properly eliminated from the remaining portion of the present invention.

## Claims

1. A broadcasting reception apparatus **characterized by** comprising:
an input section (15) configured to receive a password;
a registration section (20) configured to allow a plurality of such passwords to be registered;
a broadcasting reception section (12) configured to have its starting controlled on the basis of a result of comparison between the password registered in the registration section (20) and any password input through the input section;
a storage section (20) configured to gain information relating to a reception history with the broadcasting reception section (12) in a started state; and
a control section (19) configured to control setting contents, at a starting time of the broadcasting reception section (12), on the basis of the information relating to the reception history stored in the storage section.

2. A broadcasting reception apparatus according to claim 1, **characterized in that** the information relating to the reception history stored in the storage section (20) contains any information on a channel on which broadcasting has been received and a date and week days thereon.

3. A broadcasting reception apparatus according to claim 1, **characterized in that** the broadcasting section (12) has a mode under which starting is controlled on the basis of the result of comparison between the password registered in the registration section (20) and any password input through the input section (15) and a mode under which starting is controlled in response to the turning on of a power supply.

4. A broadcasting reception apparatus according to claim 1, **characterized in that** the reception section (12) comprises a channel selection section (23) configured to receive TV broadcasting and select video and audio signals on a predetermined channel and a signal processing section (24) configured to demodulate the video and audio signals on the channel selected by the channel selection section (23).

5. A broadcasting reception apparatus according to claim 1, **characterized in that** said control section (19) sets a reception channel at a staring time of said broadcasting reception section (12) on the basis of the stored information of said storage section (20).

## Patentansprüche

1. Rundfunkempfangsvorrichtung, **gekennzeichnet durch**:
einen Eingangsabschnitt (15), der ausgestaltet ist, um ein Passwort zu empfangen;
einen Registrierungsabschnitt (20), der ausgestaltet ist, um zu ermöglichen, dass eine Mehrzahl derartiger Passwörter registriert sind;
einen Rundfunkempfangsabschnitt (12), der ausgestaltet ist, dass sein Start auf der Grundlage eines Ergebnisses eines Vergleichs zwischen dem in dem Registrierungsabschnitt (20) registrierten Passwort und jedem **durch** den Eingangsabschnitt eingegebenen Passwort gesteuert wird;
einen Speicherabschnitt (20), der ausgestaltet ist, um Information bezüglich einer Empfangshistorie mit dem Rundfunkempfangsabschnitt (12) in einem gestarteten Zustand zu gewinnen; und
einen Steuerabschnitt (19), der ausgestaltet ist, um Einstellinhalt zu einer Startzeit des Rundfunkempfangsabschnitts (12) auf der Grundlage der Information bezüglich der in dem Speicherabschnitt gespeicherten Empfangshistorie zu steuern.

2. Rundfunkempfangsvorrichtung gemäß Anspruch 1, **dadurch gekennzeichnet, dass** die Information bezüglich der in dem Speicherabschnitt (20) gespeicherten Empfangshistorie alle Information über einen Kanal, auf dem Rundfunk empfangen wurde, und ein Datum und der Wochentage enthält.

3. Rundfunkempfangsvorrichtung gemäß Anspruch 1, **dadurch gekennzeichnet, dass** der Rundfunkabschnitt (12) eine Betriebsart, bei der das Starten auf der Grundlage des Ergebnisses eines Vergleichs zwischen dem in dem Registrierungsabschnitt (20) registrierten Passwort und jedem durch den Eingangsabschnitt (15) eingegebenen Passwort gesteuert wird, und einer Betriebsart, bei der das Starten als Reaktion auf das Anschalten einer Leistungsversorgung gesteuert wird, aufweist.

4. Rundfunkempfangsvorrichtung gemäß Anspruch 1, **dadurch gekennzeichnet, dass** der Empfangsabschnitt (12) umfasst: einen Kanalauswahlabschnitt (23), der ausgestaltet ist, um Fernsehrundfunk zu empfangen und Video- und Audiosignale auf einem vorbestimmten Kanal auszuwählen, und einen Signalverarbeitungsabschnitt (24), der ausgestaltet ist, um die Video- und Audiosignale auf dem durch die Kanalauswahlabschnitte (23) ausgewählten Kanal zu demodulieren.

5. Rundfunkempfangsvorrichtung gemäß Anspruch 1, **dadurch gekennzeichnet, dass** der Steuerabschnitt (19) einen Empfangskanal zu einer Starzeit des Rundfunkempfangsabschnitts (12) auf der Grundlage der gespeicherten Information des Speicherabschnitts (20) einstellt.

## Revendications

1. Appareil de réception de diffusion **caractérisé en ce qu'**il comprend :
une section d'entrée (15) configurée pour recevoir un mot de passe ;
une section d'enregistrement (20) configurée pour permettre d'enregistrer une pluralité de ces mots de passe ;
une section de réception de diffusion (12) configurée pour avoir son démarrage commandé sur la base d'un résultat de comparaison entre le mot de passe enregistré dans la section d'enregistrement (20) et une entrée de mot de passe quelconque par l'intermédiaire de la section d'entrée ;
une section de stockage (20) configurée pour acquérir des informations concernant l'historique de réception avec la section de réception de diffusion (12) dans un état démarré ; et
une section de commande (19) configurée pour commander des contenus de réglage, au moment du démarrage de la section de réception de diffusion (12), sur la base des informations concernant l'historique de réception stockée dans la section de stockage.

2. Appareil de réception de diffusion selon la revendication 1, **caractérisé en ce que** les informations concernant l'historique de réception stockée dans la section de stockage (20) contient des informations quelconques sur un canal sur lequel la diffusion a été reçue et une date et des jours de semaine sur celui-ci.

3. Appareil de réception de diffusion selon la revendication 1, **caractérisé en ce que** la section de diffusion (12) a un mode sous lequel le démarrage est commandé sur la base du résultat de comparaison entre le mot de passe enregistré dans la section d'enregistrement (20) et une entrée de mot de passe quelconque par l'intermédiaire de la section d'entrée (15) et un mode dans lequel le démarrage est commandé en réponse à la mise en service d'une alimentation.

4. Appareil de réception de diffusion selon la revendication 1, **caractérisé en ce que** la section de réception (12) comprend une section de sélection de canal (23) configurée pour recevoir une diffusion TV et des signaux vidéo et audio de sélection sur un canal prédéterminé et une section de traitement de signal (24) configurée pour démoduler les signaux vidéo et audio sur le canal sélectionné par la section de sélection de canal (23).

5. Appareil de réception de diffusion selon la revendication 1, **caractérisé en ce que** ladite section de commande (19) règle un canal de réception à un temps de démarrage de ladite section de réception de diffusion (12) sur la base des informations stockées de ladite section de stockage (20).
